# DEMANDE DE BREVET EUROPEEN

(11) **EP 1 048 941 A1**
(43) Date de publication de la demande: **02.11.2000**
(21) Numéro de dépôt: 00400889.2
(22) Date de dépôt: 31.03.2000
(51) Int. Cl.: G01L 3/22

(54) **Machine de charge pour un banc d'essai d'un moteur thermique**

(30) Priorité: 29.04.1999 FR 9905452
(71) Demandeur: Borghi Saveri France, 78190 Trappes (FR)
(72) Inventeur: Drecq, Daniel, 78610 Saint Leger en Yvelines (FR); Ahmed, Ben, 35200 Rennes (FR); Lesobre, Antoine, 92100 Boulogne (FR); Prevond, Laurent, 77270 Villeparisis (FR)
(74) Mandataire: Abello, Michel

(57) **Abrégé**

Machine de charge pour un banc d'essai d'un moteur thermique, comportant au moins un moyen de freinage à courants de Foucault associé à au moins un moyen électrique d'entraînement, ledit moyen de freinage comprenant un rotor denté ferromagnétique (12) solidaire d'un arbre (2) monté tournant à travers un carter (1) contenant au moins un bobinage d'induction (5) porté par une zone périphérique interne du carter, pour engendrer un champ magnétique destiné à être traversé par le rotor pour engendrer des courants de Foucault, afin de freiner la rotation de l'arbre, ledit arbre étant destiné à être accouplé au moteur thermique à essayer, caractérisée par le fait que le moyen électrique d'entraînement forme un moteur électrique à réluctance variable.

## Description

La présente invention concerne une machine de charge pour un banc d'essai dynamique pour un moteur thermique, par exemple du type Diesel ou à essence ou à gaz.

Lorsqu'un moteur thermique est accouplé à une machine de charge sur un banc d'essai, la machine de charge doit pouvoir freiner la rotation de l'arbre moteur, pour simuler le fonctionnement du moteur, en fonction des frottements au sol, à l'air et de l'inertie et de la vitesse du véhicule, à différents régimes moteurs.

On connaît déjà les machines à frein hydraulique qui présentent comme avantages une faible inertie et un faible encombrement par rapport à la puissance de freinage pouvant être fournie, ainsi qu'un coût réduit. Toutefois, les machines à frein hydraulique sont de moins en moins utilisées, car elles ne permettent pas une régulation précise, étant donné que le régulateur agit sur un fluide avec un temps de réponse relativement lent. Ainsi, une machine à frein hydraulique n'est pas adaptée pour un moteur thermique équipé d'un calculateur d'allumage et d'injection nécessitant une grande précision de régulation pour la mise au point des cartographies. En outre, il est difficile de fabriquer une machine hydraulique permettant à la fois de freiner et d'entraîner le moteur thermique.

Les machines freins à courants de Foucault sont les machines les plus utilisées dans les bancs d'essais, pour les moteurs de véhicule automobile de tourisme ou de compétition, comme pour les camions. Les freins à courants de Foucault permettent une grande précision de régulation et ont un coût modéré pour fournir une puissance faible ou moyenne. En revanche, les freins à courants de Foucault fournissant une forte puissance sont coûteux et nécessitent un rotor de grand diamètre pour fonctionner à bas régime avec un fort couple, ce qui augmente le poids et l'inertie du rotor. En outre, une machine frein à courants de Foucault ne permet pas d'entraîner un moteur thermique.

D'une manière générale, une machine frein à courants de Foucault comprend un rotor constitué d'un disque ferromagnétique denté qui tourne dans un champ magnétique, les dents du disque provoquant une variation d'induction et donc des courants de Foucault sur les surfaces des deux pièces métalliques situées de part et d'autre du rotor ; ces courants se déplacent avec le rotor dans le champ magnétique et provoquent en retour un couple de freinage du rotor, ce qui est l'effet recherché ; ils dissipent par effet Joule une énergie importante. L'élément générateur de champ magnétique est une bobine alimentée électriquement, par exemple par un courant alternatif ou un courant continu haché, qui est solidaire du carter de la machine. La chaleur dissipée par effet Joule est évacuée par un jeu d'échangeurs de chaleur, eux aussi solidaires du carter, qui sont alimentés en liquide de refroidissement au moyen de tubulures appropriées.

Pour pouvoir étudier le comportement du moteur thermique en régime de frein moteur, il est nécessaire d'ajouter un moyen d'entraînement en rotation de l'arbre moteur. Toutefois, un tel moyen d'entraînement n'a pas besoin de développer 100 % de la puissance du moteur thermique, mais simplement de l'ordre de 40 % de la charge complète, pour compenser en fait simplement l'énergie cinétique du véhicule. A titre d'exemple, si le moteur thermique présente une puissance de 200 kW, le frein à courants de Foucault doit également présenter une puissance de 200 kW, alors que le moyen d'entraînement peut présenter simplement une puissance de l'ordre de 80 kW.

En effet, la machine de freinage doit pouvoir compenser la puissance nominale du moteur thermique, qui est fonction des caractéristiques géométriques et massiques du véhicule, au regard de la vitesse maximum à atteindre, alors que le moyen d'entraînement doit simplement simuler la puissance entraînante du moteur thermique qui est fonction uniquement de l'inertie du véhicule dans les phases de décélération ou de route descendante.

A titre de moyens d'entraînement, on a déjà utilisé des moteurs électriques à courant continu ou à courant alternatif asynchrone, qui sont accouplés en ligne avec la machine frein à courants de Foucault. Toutefois, l'accouplement d'un tel moteur électrique à une machine frein à courants de Foucault a pour effet de doubler l'encombrement en longueur (1,5 m au lieu de 0,75 m), de doubler l'inertie et de tripler le coût, par rapport à la machine frein à courants de Foucault seule.

Le fait d'avoir une inertie élevée dans la machine de charge rend difficile l'élévation rapide en régime du moteur. Cet aspect est particulièrement sensible pour les essais des moteurs thermiques pour les véhicules automobiles de compétition, par exemple la formule 1, où le moteur doit pouvoir passer de 0 à 15 000 tours/minute en une seconde.

On a également proposé de remplacer l'ensemble de la machine frein à courants de Foucault et du moteur électrique par un unique moteur électrique à courant continu ou à courant alternatif asynchrone. Le même moteur permet ainsi d'effectuer des essais en dynamique, c'est-à-dire de fonctionner, soit en frein, soit en générateur. Le moteur permet ainsi de réaliser des essais de simulation de fonctionnement sur route avec prise en compte de la masse du véhicule simulé, y compris les passages de rapport de boîtes de vitesse. Cette simulation de la restitution de l'énergie emmagasinée par l'organe qui absorbe l'énergie du moteur thermique trouve aussi quelques applications en dehors des véhicules automobiles ou des camions. Toutefois, l'inertie d'un tel moteur électrique est environ trois fois supérieure à celle d'un frein à courants de Foucault seul, et le coût est environ cinq fois supérieur. En effet, lorsque le moteur électrique est utilisé comme frein, il fonctionne comme un alternateur ou une dynamo, c'est-à-dire produit du courant électrique qu'il faut renvoyer au réseau. Compte tenu de la puissance développée par les moteurs thermiques et donc de l'intensité du courant engendré, il est nécessaire d'associer au moteur électrique une armoire spéciale pour renvoyer le courant sur le réseau d'électricité. En outre, par exemple pour un frein de 200 kW, l'encombrement en longueur de ce moteur électrique est de l'ordre de 1,5 m, alors qu'une machine frein à courants de Foucault présente une longueur de 0,75 m seulement.

En outre, l'utilisation des moteurs électriques à courant continu est difficile pour un banc d'essai d'un moteur thermique, car il faut alors tenir compte du fonctionnement des frotteurs ou balais du moteur électrique dans un environnement gras. Par ailleurs, les moteurs asynchrones ont une inertie élevée et un échauffement important du rotor difficile à refroidir car c'est une pièce tournante.

L'invention a pour but d'éliminer les inconvénients précités et de proposer une machine de charge qui fonctionne aussi bien en frein ou en générateur, tout en présentant, grâce au rotor passif, une inertie faible, donc une grande adaptabilité aux hautes vitesses, et un échauffement des parties externes au rotor, donc une grande facilité de refroidissement. Par ailleurs, l'utilisation de moteur à réluctance variable permet de fonctionner en frein ou en générateur. Enfin, le coût d'une telle machine sera modéré. Un autre but de l'invention est de proposer une telle machine de charge qui présente un faible encombrement en longueur.

A cet effet, l'invention a pour objet une machine de charge pour un banc d'essai d'un moteur thermique, comportant au moins un moyen de freinage à courants de Foucault associé à au moins un moyen électrique d'entraînement, ledit moyen de freinage comprenant un rotor denté ferromagnétique solidaire d'un arbre monté tournant à travers un carter contenant au moins un bobinage d'induction porté par une zone périphérique interne du carter, pour engendrer un champ magnétique destiné à être traversé par le rotor pour engendrer des courants de Foucault, afin de freiner la rotation de l'arbre, ledit arbre étant destiné à être accouplé au moteur thermique à essayer, caractérisée par le fait que le moyen électrique d'entraînement forme un moteur électrique à réluctance variable. Les courants de Foucault ne sont donc pas engendrés dans le rotor, mais sur les pièces métalliques situées de part et d'autre de celui-ci.

Dans un premier mode de réalisation, le moteur à réluctance variable est monté en série avec le moyen de freinage et comporte un stator solidaire de deux parois latérales opposées traversées de manière tournante par l'arbre précité, de façon que l'une desdites parois soit adjacente au carter du moyen de freinage, un rotor ferromagnétique solidaire de l'arbre et axialement espacé du rotor denté ferromagnétique, et une pluralité de bobines d'excitation agencées sur ledit stator autour de la périphérie du rotor ferromagnétique, pour engendrer une force magnétomotrice d'entraînement du rotor. Un tel ensemble est certes plus long que la seule machine frein à courants de Foucault, mais plus court qu'un moteur électrique asynchrone ou à courant continu. En outre, la machine selon ce premier mode de réalisation présente une plus faible inertie, étant donné qu'aucun rotor n'est muni de bobinages. Bien entendu, il est possible de monter plusieurs rotors en série sur le même arbre.

Dans un autre mode de réalisation, le moteur à réluctance variable est intégré au moyen de freinage, le rotor denté ferromagnétique servant également de rotor pour le moteur électrique, ce dernier comportant une pluralité de bobines d'excitation logées dans le carter pour engendrer une force magnétomotrice d'entraînement du rotor. Dans ce cas, l'arbre destiné à être accouplé au moteur thermique ne comporte qu'un unique rotor, ce qui réduit fortement son inertie ainsi que l'encombrement global de la machine (par exemple 0,5 à 0,75 m en longueur). En fait, l'inertie de la machine selon le deuxième mode de réalisation est sensiblement égale à celle d'un frein à courants de Foucault seul. Le coût d'une telle machine est relativement faible, de l'ordre de une à 1,5 fois le coût d'une machine frein à courants de Foucault.

Dans une variante, le moteur électrique comporte au moins un stator ferromagnétique radialement intercalé entre la périphérie interne d'une bobine d'induction coaxiale au rotor et la périphérie externe dudit rotor, les bobines d'excitation étant agencées sur la périphérie interne du stator de façon que leurs axes respectifs s'étendent radialement par rapport au rotor et soient angulairement espacés de manière régulière.

Dans une autre variante, le moteur électrique comporte un stator ferromagnétique axialement intercalé entre deux bobines d'induction latérales et coaxiales au rotor, ledit stator entourant périphériquement le rotor, les bobines d'excitation étant agencées sur la périphérie interne du stator de façon que leurs axes respectifs s'étendent radialement par rapport au rotor et soient angulairement espacés de manière régulière.

Dans un premier cas, les deux bobines d'induction s'étendent de part et d'autre des bobines d'excitation, dans la direction axiale de l'arbre. Cette variante permet de diminuer l'encombrement en diamètre vis-à-vis de la précédente variante, mais au détriment de la longueur. En outre, l'installation d'une deuxième bobine d'induction pour le freinage, augmente le coût de la machine. Dans un deuxième cas, les deux bobines d'induction sont radialement intercalées entre les bobines d'excitation et la périphérie interne du carter.

Selon encore une autre variante, le bobinage d'induction est coaxial au rotor et l'entoure périphériquement, les bobines d'excitation étant agencées sur les faces internes de deux parois latérales axialement espacées du carter, de façon que leurs axes respectifs soient parallèles et angulairement espacés de manière régulière par rapport à l'axe du rotor, l'ensemble des axes des bobinages d'excitation étant inscrit dans un cylindre circulaire centré sur l'axe du rotor et de rayon inférieur à celui-ci. Avantageusement, le carter comporte en saillie sur les faces internes desdites parois latérales, un échangeur de chaleur en regard du rotor, les bobines d'excitation précitées étant logées dans des encoches ménagées sur l'échangeur de chaleur.

Selon encore une autre variante, deux moteurs à réluctance variable sont intégrés au moyen de freinage, le rotor comprenant de part et d'autre de son plan, deux extensions axiales dentées à leur périphérie et situées en vis-à-vis de deux stators ferromagnétiques entourant périphériquement chaque extension axiale du rotor, dans le carter, deux séries distinctes de bobines d'excitation étant agencées sur la périphérie interne de chaque stator, pour définir les deux moteurs précités.

Avantageusement, le carter comporte en saillie sur ses faces latérales internes un échangeur de chaleur en regard du rotor, le bobinage d'induction étant coaxial au rotor et entourant périphériquement l'échangeur de chaleur et le rotor, les deux stators précités étant entourés périphériquement par l'échangeur de chaleur.

Selon une autre caractéristique de l'invention, le rotor comporte une pluralité de bras radiaux angulairement espacés de manière régulière et reliés entre eux par des voiles médians en forme de secteur angulaire d'épaisseur inférieure à celle des bras. Avantageusement, chaque bras s'étend radialement au-delà des voiles du rotor pour définir une pluralité de dents à la périphérie du rotor.

Selon encore une autre caractéristique, chaque bobine d'induction est alimentée en courant continu haché à fréquence fixe et les bobines d'excitation sont alimentées en courant continu haché à une fréquence supérieure qui peut être variable.

Pour mieux faire comprendre l'objet de l'invention, on va en décrire maintenant, à titre d'exemples purement illustratifs et non limitatifs, plusieurs modes de réalisation représentés sur le dessin annexé.

Sur ce dessin :
- la figure 1 est une vue en coupe axiale, suivant la ligne I-I de la figure 3, d'un premier mode de réalisation de la machine de l'invention,
- les figures 2 et 3 sont des vues en coupe transversale suivant les lignes II-II et III-III de la figure 1, représentant respectivement le moyen de freinage et le moyen d'entraînement de la machine,
- la figure 4 est une vue en coupe axiale d'un deuxième mode de réalisation de la machine de l'invention, suivant la ligne IV-IV de la figure 5,
- la figure 5 est une vue en coupe transversale suivant la ligne V-V de la figure 4,
- la figure 6 est une vue en coupe axiale suivant la ligne VI-VI de la figure 7, représentant une autre variante de réalisation de la machine de l'invention,
- la figure 7 est une vue en coupe transversale suivant la ligne VII-VII de la figure 6,
- la figure 8 est une vue en coupe axiale suivant la ligne VIII-VIII de la figure 9, représentant une autre variante de réalisation de la machine de l'invention comportant un frein à courants de Foucault associé à deux moteurs électriques à réluctance variable,
- les figures 9 et 10 sont des vues en coupe transversale suivant les lignes IX-IX et X-X de la figure 8, représentant respectivement la partie freinage et la partie entraînement de la machine,
- la figure 11 est une vue en coupe axiale suivant la ligne XI-XI de la figure 12, représentant encore une autre variante de la machine de l'invention,
- la figure 12 est une vue en coupe transversale suivant la ligne XII-XII de la figure 11,
- la figure 13 est une vue en perspective d'une forme particulière de réalisation du rotor destiné à être utilisé dans une machine selon l'invention, et
- la figure 14 est une vue analogue à la figure 4, mais suivant une autre forme de réalisation de l'invention.

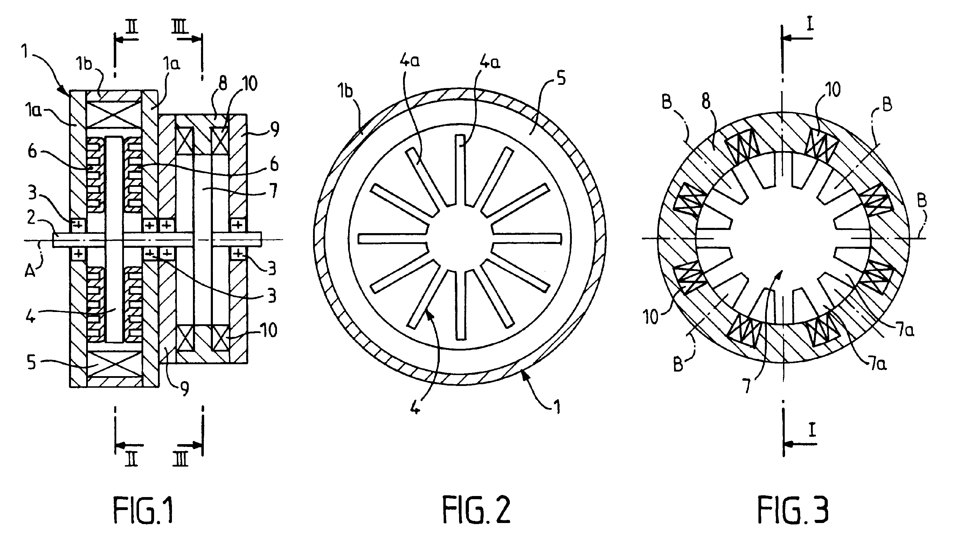

En référence aux figures 1 à 3, on va décrire un premier mode de réalisation de la machine selon l'invention.

La machine comporte un carter 1 dont les parois latérales 1a sont en forme de disque circulaire percé en son centre et dont la paroi longitudinale 1b est de forme cylindrique circulaire. Un arbre rotatif 2 est monté, par l'intermédiaire de roulements 3 à travers les parois latérales 1a du carter 1. L'arbre 2 est destiné à être accouplé à une extrémité à un moteur thermique à essayer.

L'arbre 2 est solidaire en rotation d'un rotor denté ferromagnétique 4 qui s'étend à l'intérieur du carter 1. Comme mieux visible sur la figure 2, le rotor 4 comporte une section centrale circulaire de petit diamètre se prolongeant radialement par une pluralité de bras 4a angulairement espacés de manière régulière autour de l'axe A de l'arbre 2. A titre d'exemple, le rotor 4 comporte douze bras 4a. Bien que cela ne soit pas représenté, les bras 4a peuvent être reliés entre eux par des voiles médians en forme de secteur angulaire de plus faible épaisseur.

Un bobinage circulaire d'induction 5 est porté par la périphérie interne de la paroi longitudinale cylindrique 1b du carter 1, pour engendrer un champ magnétique axial. Le bobinage 5 est radialement espacé des extrémités libres des bras 4a du rotor 4, comme visible sur les figures 1 et 2.

Un échangeur de chaleur annulaire 6 constitué de labyrinthes de refroidissement, est porté en saillie par les deux faces internes des parois latérales la du carter 1. Les échangeurs de chaleur 6 constituent des boîtes de circulation de liquide de refroidissement, par exemple de l'eau. Les échangeurs de chaleur sont axialement espacés du rotor 4 par un faible jeu formant un entrefer de petite dimension. Les boîtes annulaires 6 s'étendent radialement entre l'arbre 2 et le bobinage d'induction 5. De préférence, les échangeurs de chaleur 6 s'étendent uniquement en vis-à-vis du rotor 4.

Un deuxième rotor 7 en matériau ferromagnétique est solidarisé de l'arbre 2 à une distance suffisante du rotor 4, pour que le rotor 7 ne soit pas contenu dans le carter 1. Un stator en matériau ferromagnétique 8 entoure périphériquement le rotor 7 et est fermé à ses deux extrémités axiales par deux parois en forme de disque circulaire 9 percé au centre, à travers lesquelles est monté l'arbre 2, par l'intermédiaire de roulements 3.

Comme mieux visible sur la figure 3, le rotor ferromagnétique 7 comporte à sa périphérie une pluralité de dents 7a, par exemple douze dents, définissant entre le rotor et le stator un entrefer variable, pour faire varier la réluctance du moteur électrique.

Le stator 8 comporte sur sa périphérie interne des encoches sensiblement rectangulaires dans lesquelles sont logés des bobinages d'excitation 10 dont les axes B s'étendent radialement par rapport à l'axe A du rotor 7. Les encoches ménagées sur la périphérie interne du stator 8 définissent un stator denté, par exemple ici à huit dents.

L'ensemble 7 à 10 constitue un moteur électrique à réluctance variable qui ne sera pas décrit plus en détail, car il est connu en soi.

Comme visible sur la figure 1, les parois adjacentes 1a et 9 sont accolées pour réduire la longueur de la machine de charge.

D'une manière également connue en soi, le stator ferromagnétique 8 est constitué d'un empilage de tôles coaxiales et perpendiculaires à l'axe A, pour réduire les pertes magnétiques, lors du passage du champ magnétique.

Des échangeurs de chaleur peuvent également être installés sur les faces internes des parois 9 du moteur électrique.

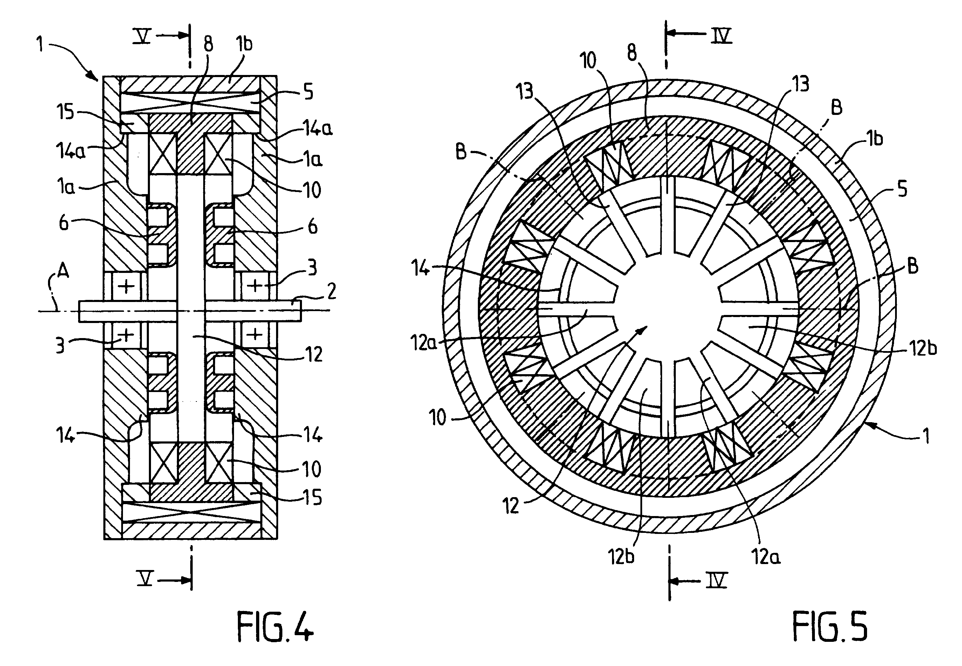

On va maintenant décrire un autre mode de réalisation de l'invention, en référence aux figures 4 et 5. Les mêmes chiffres de référence seront utilisés pour désigner des éléments identiques ou analogues au premier mode de réalisation.

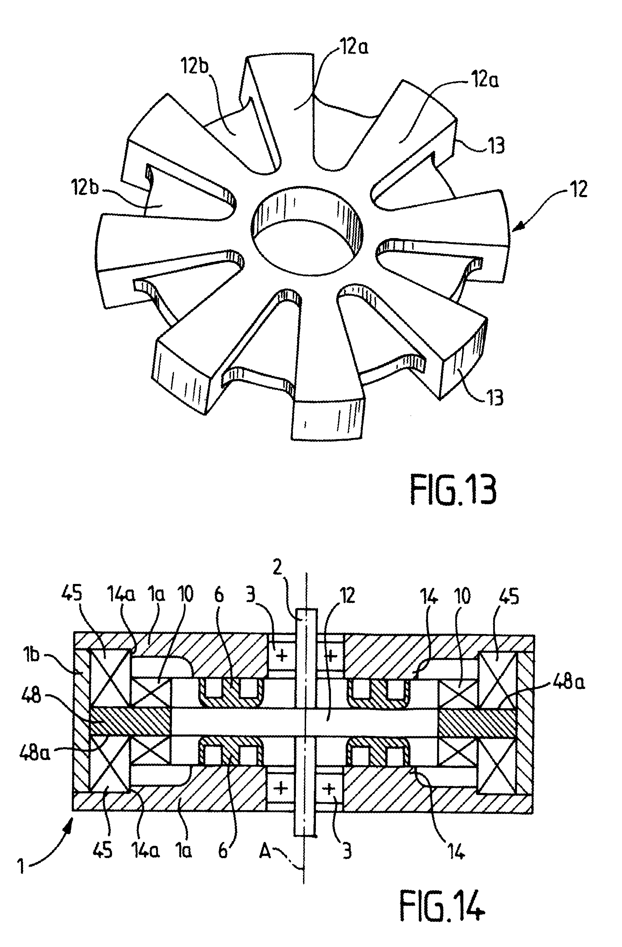

Le moteur électrique à réluctance variable est intégré ici dans le moyen de freinage à courants de Foucault. En effet, la machine comporte un unique rotor 12 constitué d'un moyeu central de section circulaire à partir duquel s'étendent une pluralité de bras radiaux 12a, angulairement espacés de manière régulière, les bras radiaux 12a étant reliés entre eux par des voiles médians 12b ayant une forme de secteur angulaire d'épaisseur inférieure à celle des bras. Comme mieux visible sur la figure 13, les bras 12a s'étendent radialement au-delà des voiles 12b, de façon à définir une pluralité de dents 13 sur la périphérie extérieure du rotor 12. Le rotor 12 en matériau ferromagnétique.

Les parois latérales 1a du carter 1 comportent une collerette annulaire 14 axialement saillante vers l'intérieur, pour définir une surface d'appui pour les échangeurs de chaleur 6. De préférence, le diamètre extérieur des échangeurs de chaleur 6 est sensiblement égal au diamètre extérieur des voiles 12b du rotor 12.

Au voisinage de leur périphérie, les parois 1a comportent sur leur face interne un renfoncement annulaire 14a destiné à recevoir successivement dans une direction radiale, une pièce annulaire de maintien 15, le bobinage d'induction 5 et la paroi longitudinale 1b du carter 1. La pièce de maintien 15 est constituée d'un manchon cylindrique creux destiné à maintenir latéralement le stator 8 au centre du carter 1. Le stator 8 entoure sensiblement les échangeurs de chaleur 6 et le rotor 12. Le bobinage d'induction 5 s'étend sur toute la longueur de la paroi cylindrique 1b et entoure à la fois le stator 8 et les pièces de maintien 15.

Le bobinage d'induction 5 dans la machine du deuxième mode de réalisation illustré sur les figures 4 et 5, présente un plus grand diamètre que celui du bobinage du premier mode de réalisation, car dans le deuxième mode de réalisation, le stator 8 est intercalé entre le rotor 12 et le bobinage 5.

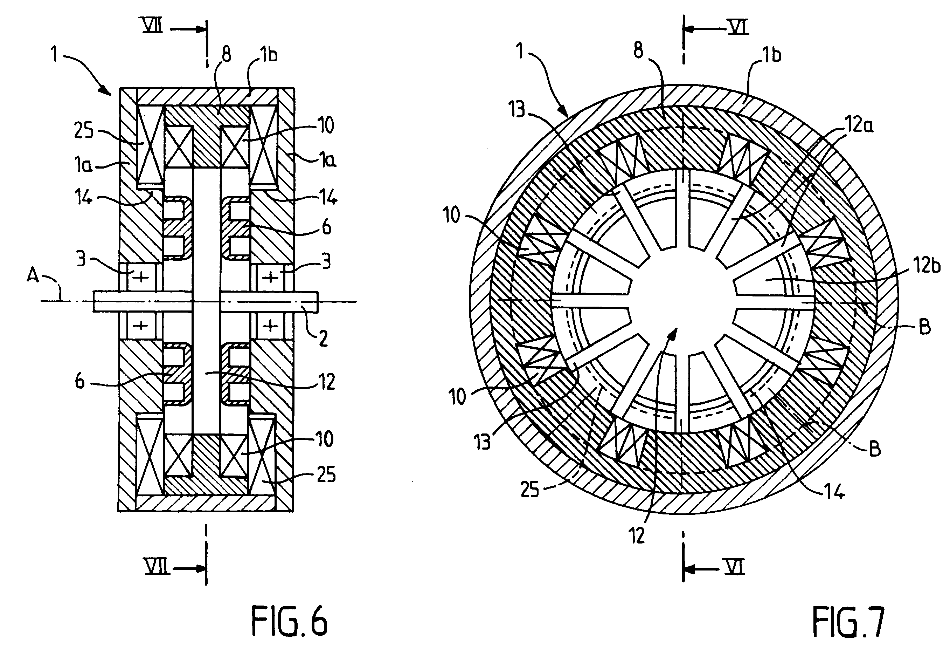

Dans la variante illustrée sur les figures 6 et 7, le diamètre global du carter 1 est réduit par rapport au deuxième mode de réalisation illustré sur les figures 4 et 5. En effet, sur la figure 6, le stator 8 est en contact par sa périphérie extérieure avec la paroi cylindrique 1b du carter 1, et deux bobinages d'induction 25 sont enroulés de part et d'autre du stator 8, autour des collerettes annulaires 14 des parois latérales 1a du carter 1. Dans ce cas, on constate que chaque bobinage d'induction 25 peut entourer latéralement le stator 8 et une partie des dents 13 du rotor 12. L'épaisseur axiale de chaque bobinage 25 est égale à celle de la collerette 14. Les deux bobines d'induction 25 s'étendent de part et d'autre des bobines d'excitation 10, dans la direction axiale.

En fait, les collerettes annulaires 14 sont nécessaires dans la variante illustrée sur la figure 6 pour pouvoir loger les deux bobinages d'induction 25, alors que dans la variante de la figure 4, les collerettes annulaires 14 pourraient être supprimées. Dans ce cas, l'encombrement axial de la machine de la figure 6 serait augmenté par rapport à celui de la machine de la figure 4, dépourvue des collerettes 14.

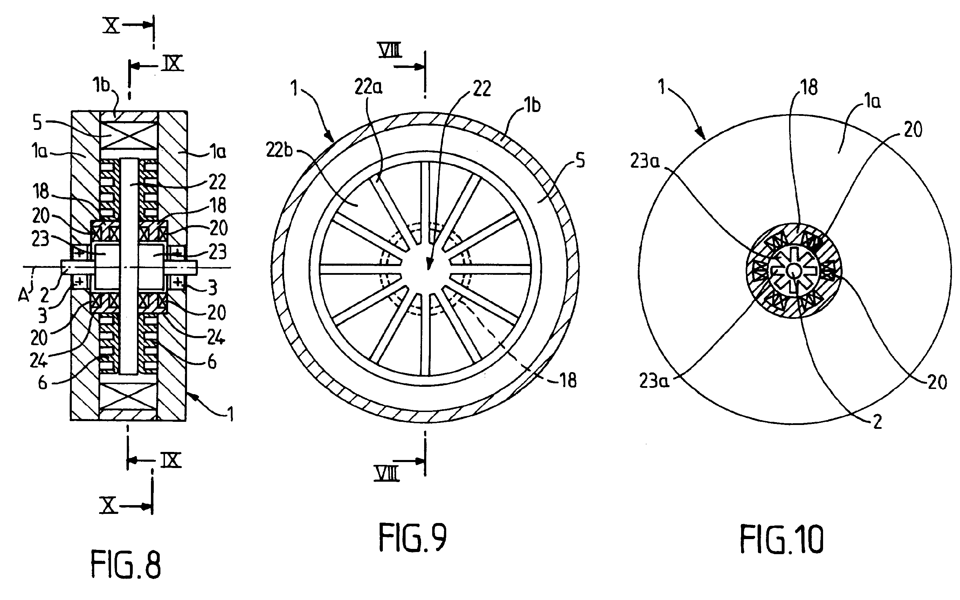

En se référant aux figures 8 à 10, on va maintenant décrire une autre variante de réalisation de la machine de l'invention.

En partant du carter 1 illustré sur la figure 1, on constate que le carter 1 sur la figure 8 présente des parois latérales 1a de plus grande épaisseur, de façon à présenter un alésage central 24 sur leurs faces internes, chaque alésage 24 étant destiné à recevoir un stator 18.

Le rotor 22 est également ici denté et ferromagnétique, de manière à intégrer deux moteurs électriques à réluctance variable dans la même machine frein à courants de Foucault. Le rotor 22 comporte une pluralité de bras radiaux 22a qui peuvent être reliés entre eux par des voiles médians 22b de plus faible épaisseur, comme dans le cas de la figure 1. Les bras radiaux 22a ne s'étendent pas au-delà des voiles médians 22b, car il n'est pas nécessaire de prévoir des dents à la périphérie externe du rotor 22, en vis-à-vis de la bobine d'induction 5. En revanche, le moyeu central du rotor 22 présente deux extensions axiales de part et d'autre de son plan moyen, lesdites extensions axiales 23 présentant une pluralité de bras radiaux 23a de dimensions radiales nettement inférieures à celles des bras 22a, de façon à définir une pluralité de dents à la périphérie des extensions 23, qui constituent le rotor de chaque moteur électrique à réluctance variable. Chaque extension 23 est entourée périphériquement par un stator 18 qui comporte sur sa périphérie interne une pluralité de bobinages d'excitation 20 ayant leur axe s'étendant radialement par rapport à l'arbre 2.

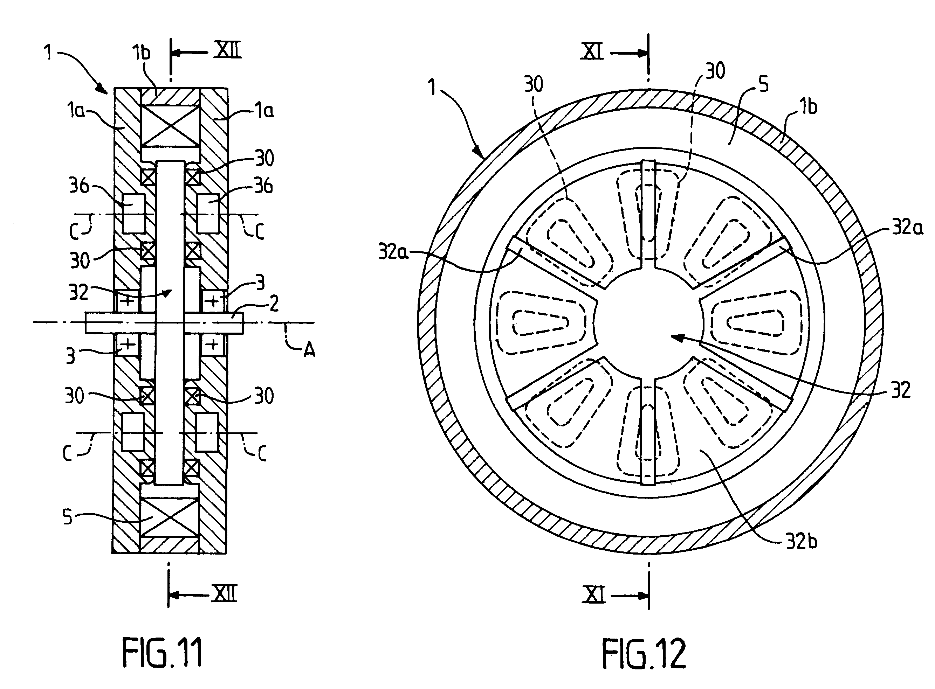

Les figures 11 et 12 représentent encore une autre variante de réalisation de l'invention.

Dans cette variante, le rotor 32, qui est toujours denté et ferromagnétique, comporte une pluralité de bras radiaux 32a qui s'étendent à partir d'un moyeu central et une pluralité de voiles 32b pouvant relier angulairement les bras 32a, sans que ces bras dépassent radialement des voiles. A titre d'exemple, le rotor 32 comporte ici six bras radiaux 32a.

Contrairement aux autres variantes illustrées sur les figures 1 à 10, les bobines d'excitation 30 du moteur électrique à réluctance variable ne sont pas agencées avec leur axe s'étendant radialement par rapport au rotor, mais avec leur axe respectif C s'étendant parallèlement à l'axe A du rotor. Les bobinages d'excitation 30 sont agencés sur les faces internes des parois latérales 1a du carter 1. L'ensemble des axes C des bobinages d'excitation 30 sont inscrits dans un cylindre circulaire centré sur l'axe A du rotor 32 et de rayon inférieur à celui du rotor, de façon que chaque bobinage 30 soit situé en vis-à-vis des bras 32a du rotor 32. Dans ce cas, l'entrefer variable entre les bobinages d'excitation 30 et le rotor 32 est défini par la différence d'épaisseur entre les bras 32a et les voiles médians 32b du rotor 32 si ceux-ci existent. Cette différence d'épaisseur est mieux visible sur la figure 13. A titre d'exemple, les bobinages d'excitation 30 sont enroulés autour d'un noyau triangulaire ou trapézoïdal.

En fait, les bobinages d'excitation 30 sont placés dans des encoches annulaires ménagées sur les faces latérales internes des échangeurs de chaleur 36. Les échangeurs de chaleur 36 sont formés ici dans l'épaisseur des parois latérales 1a du carter 1, lesdites parois latérales 1a présentant une surépaisseur annulaire saillante vers l'intérieur du carter au niveau desdits échangeurs de chaleur 36.

Dans la variante illustrée sur la figure 14, la machine diffère de celle illustrée sur les figures 4 et 5, par le fait que le stator 48 comporte de part et d'autre de son plan moyen une gorge annulaire 48a qui est destinée à recevoir respectivement un bobinage d'induction 45. Les deux bobinages d'induction 45 sont enroulés de part et d'autre du stator 48, entre les renfoncements annulaires 14a et la paroi cylindrique 1b du carter 1. Chaque bobinage d'induction 45 est périphériquement circonscrit à une portion de chaque bobinage d'excitation 10.

Quelle que soit la variante de réalisation représentée sur les figures 1 à 14, la machine de charge, selon l'invention, peut fonctionner simultanément en mode frein et en mode générateur, ou bien uniquement en mode frein ou en mode générateur. Même lorsque l'on veut essayer un moteur thermique sur le banc d'essai, en régime normal sans frein moteur, les bobines d'excitation du moteur électrique à réluctance variable peuvent être alimentées en courant, afin de compenser les pertes magnétiques dues à la rémanence magnétique du rotor, du fait du fonctionnement du frein à courants de Foucault.

A titre d'exemple, les bobines d'induction du frein et les bobines d'excitation du générateur sont alimentées en courant continu, avec une intensité de l'ordre de 15A et une tension de l'ordre de 200V. En revanche, la fréquence de hachage du courant envoyé dans les bobines de freinage est fixe, alors que la fréquence de hachage du courant envoyé dans les bobines du moteur est supérieure et peut être variable.

De manière générale, le rotor comportera un nombre de dents ou de bras qui pourra être différent du nombre de bobines d'excitation. Ce nombre pourra être pair ou impair.

Pour la structure propre de la machine frein à courants de Foucault illustrée sur la figure 2, on pourra se référer à la demande de brevet européen n° 802 403. Dans tous les cas, la mesure du couple pourra être faite par un montage en balance ou avec un couple-mètre, comme décrit dans la demande de brevet européen n° 802 403.

Bien que l'invention ait été décrite en liaison avec plusieurs variantes de réalisation particulières, il est bien évident qu'elle n'y est nullement limitée et qu'elle comprend tous les équivalents techniques des moyens décrits ainsi que leurs combinaisons, si celles-ci entrent dans le cadre de l'invention.

## Revendications

1. Machine de charge pour un banc d'essai d'un moteur thermique, comportant au moins un moyen de freinage à courants de Foucault associé à au moins un moyen électrique d'entraînement, ledit moyen de freinage comprenant un rotor denté ferromagnétique (4, 12, 22, 32) solidaire d'un arbre (2) monté tournant à travers un carter (1) contenant au moins un bobinage d'induction (5, 25, 45) porté par une zone périphérique interne du carter, pour engendrer un champ magnétique destiné à être traversé par le rotor pour engendrer des courants de Foucault, afin de freiner la rotation de l'arbre, ledit arbre étant destiné à être accouplé au moteur thermique à essayer, caractérisée par le fait que le moyen électrique d'entraînement forme un moteur électrique à réluctance variable.

2. Machine selon la revendication 1, caractérisée par le fait que le moteur à réluctance variable est monté en série avec le moyen de freinage et comporte un stator (8) solidaire de deux parois latérales opposées (9) traversées de manière tournante par l'arbre précité (2), de façon que l'une desdites parois soit adjacente au carter (1) du moyen de freinage, un rotor ferromagnétique (7) solidaire de l'arbre et axialement espacé du rotor denté ferromagnétique (4), et une pluralité de bobines d'excitation (10) agencées sur ledit stator (8) autour de la périphérie du rotor ferromagnétique (7), pour engendrer une force magnétomotrice d'entraînement du rotor.

3. Machine selon la revendication 1, caractérisée par le fait que le moteur à réluctance variable est intégré au moyen de freinage, le rotor (12, 22, 32) étant prévu en matériau ferromagnétique pour servir également de rotor pour le moteur électrique, ce dernier comportant une pluralité de bobines d'excitation (10, 20, 30) logées dans le carter (1) pour engendrer une force magnétomotrice d'entraînement du rotor.

4. Machine selon la revendication 3, caractérisée par le fait que le moteur électrique comporte au moins un stator ferromagnétique (8) radialement intercalé entre la périphérie interne d'une bobine d'induction (5) coaxiale au rotor (12) et la périphérie externe dudit rotor, les bobines d'excitation (10) étant agencées sur la périphérie interne du stator (8) de façon que leurs axes respectifs (B) s'étendent radialement par rapport au rotor et soient angulairement espacés de manière régulière.

5. Machine selon la revendication 3, caractérisée par le fait que le moteur électrique comporte un stator ferromagnétique (8, 48) axialement intercalé entre deux bobines d'induction (25, 45) latérales et coaxiales au rotor (12), ledit stator entourant périphériquement le rotor, les bobines d'excitation (10) étant agencées sur la périphérie interne du stator de façon que leurs axes respectifs (B) s'étendent radialement par rapport au rotor et soient angulairement espacés de manière régulière.

6. Machine selon la revendication 5, caractérisée par le fait que les deux bobines d'induction (25) s'étendent de part et d'autre des bobines d'excitation (10), dans la direction axiale (A) de l'arbre (2).

7. Machine selon la revendication 5, caractérisée par le fait que les deux bobines d'induction (25) sont radialement intercalées entre les bobines d'excitation (10) et la périphérie interne (1b) du carter.

8. Machine selon la revendication 3, caractérisée par le fait que le bobinage d'induction (5) est coaxial au rotor (32) et l'entoure périphériquement, les bobines d'excitation (30) étant agencées sur les faces internes de deux parois latérales (1a) axialement espacées du carter (1), de façon que leurs axes respectifs (C) soient parallèles et angulairement espacés de manière régulière par rapport à l'axe (A) du rotor, l'ensemble des axes (C) des bobinages d'excitation étant inscrit dans un cylindre circulaire centré sur l'axe du rotor et de rayon inférieur à celui-ci.

9. Machine selon la revendication 8, caractérisée par le fait que le carter (1) comporte en saillie sur les faces internes desdites parois latérales (la), un échangeur de chaleur (36) en regard du rotor, les bobines d'excitation (30) précitées étant logées dans des encoches ménagées sur l'échangeur de chaleur.

10. Machine selon la revendication 3, caractérisée par le fait que deux moteurs à réluctance variable sont intégrés au moyen de freinage, le rotor (22) comprenant de part et d'autre de son plan, deux extensions axiales (23) dentées à leur périphérie et situées en vis-à-vis de deux stators ferromagnétiques (18) entourant périphériquement chaque extension axiale du rotor, dans le carter (1), deux séries distinctes de bobines d'excitation (20) étant agencées sur la périphérie interne de chaque stator, pour définir les deux moteurs précités.

11. Machine selon la revendication 10, caractérisée par le fait que le carter (1) comporte en saillie sur ses faces latérales internes un échangeur de chaleur (6) en regard du rotor, le bobinage d'induction (5) étant coaxial au rotor et entourant périphériquement l'échangeur de chaleur et le rotor, les deux stators précités (18) étant entourés périphériquement par l'échangeur de chaleur.

12. Machine selon l'une des revendications 3 à 11, caractérisée par le fait que le rotor (12, 22, 32) comporte une pluralité de bras radiaux (12a, 22a, 32a) angulairement espacés de manière régulière et reliés entre eux par des voiles médians (12b, 22b, 32b) en forme de secteur angulaire d'épaisseur inférieure à celle des bras.

13. Machine selon la revendication 12, caractérisée par le fait que chaque bras (12a) s'étend radialement au-delà des voiles (12b) du rotor (12) pour définir une pluralité de dents (13) à la périphérie du rotor.

14. Machine selon l'une des revendications 2 à 13, caractérisée par le fait que chaque bobine d'induction est alimentée en courant continu haché avec une fréquence fixe et les bobines d'excitation (10, 20, 30) sont alimentées en courant continu haché à une fréquence supérieure pouvant être variable.
